# EUROPEAN PATENT APPLICATION

(11) **EP 2 511 410 A1**
(43) Date of publication of application: **17.10.2012**
(21) Application number: 10835448.1
(22) Date of filing: 25.11.2010
(51) Int. Cl.: D06B 5/12

(54) **TIGHTLY-COMPRESSING AND NON-SOAKING FIBER-DYEING METHOD AT ULTRA-SMALL LIQUOR RATIO**

(30) Priority: 09.12.2009 CN 200910242148
(71) Applicant: Beijing Snowlotus Group Co., Ltd., Beijing 100122 (CN)
(72) Inventor: ZHANG, Rongxiang, Beijing 100122 (CN)
(74) Representative: Klauer, Stephan
(86) International application number: PCT/CN2010/079144
(87) International publication number: WO 2011/069413

(57) **Abstract**

A tightly-compressing and non-soaking fiber-dyeing method at ultra-small liquor ratio is disclosed, which involves compulsorily compressing the material to be dyed and then dyeing the material to be dyed under compressed state by passing through it with a flowing dyeing liquid. The compressing capacity of the material to be dyed can usually be 0.4-0.5 g/cm³, and the mass liquor ratio between the material to be dyed and the dyeing liquid used is no more than 1:2. This invention enables fiber-dyeing at ultra-small liquor ratio, reduces water consumption and sewage emission of dyeing process, increases the dyeing uniformity, effectively relieves the environmental pollution caused by sewage, and therefore reduces the production cost. The method can be mainly used for dyeing the loose stocks, tops and yarns of natural fibers or chemical fibers.

## Description

### Technical Field

The invention relates to a tightly-compressing and non-soaking fiber-dyeing method at ultra-small liquor ratio, which can be mainly used for dyeing the loose stocks, tops and yarns of all kinds of natural fibers or chemical fibers.

### Background Art

The existing fiber-dyeing manners are mainly divided into: loose-stock dyeing, top dyeing, yam dyeing, finished product dyeing (piece dyeing and ready-made clothes dyeing), etc. Each dyeing manner has respective dyeing equipment, such as loose wool dyeing machine, top dyeing machine, yam dyeing machine, rope form piece dyeing machine, etc. As different materials to be dyed need different dyeing equipment, not only the cost for production equipment is increased, but also a larger production space is also needed to be occupied.

In the textile dyeing industry, the liquor ratio is the mass ratio between a material to be dyed and the dyeing liquid used; and for materials to be dyed of the same amount, the more dyeing liquid is consumed by the material to be dyed, the larger the liquor ratio is. When the existing various dyeing equipments dye the material to be dyed, for the sake of level dyeing and the prevention of the blowout of the dyeing liquid, the material to be dyed will be soaked in the dyeing liquid, consequently, plenty of water is consumed, and the liquor ratio is relatively large. Under normal circumstances, 1kg of the material to be dyed needs 10-25 kg of water for preparing the dyeing liquid during dyeing, and the liquor ratio is about 1:10-25.Under this technical route, even if technical personnel in the industry improve the dyeing equipments, the water consumption required by dyeing is not obviously reduced, the liquor ratio is not obviously lowered, the sewage emission in dyeing is still large, which directly results in the increase in the comprehensive cost of an enterprise, the decrease in profits and large pressure for environmental protection.

### Contents of Invention

In order to overcome the defects in the prior art, the invention provides a tightly-compressing and non-soaking fiber-dyeing method at ultra-small liquor ratio. According to the method, the soaking is not needed and the dyeing at ultra-small liquor ratio can be achieved, so that the water consumption and the sewage emission of dyeing process are reduced; and meanwhile, the method is further suitable for dyeing various different materials, thereby being beneficial to saving water consumption, relieving the environmental pollution caused by dyeing sewage, and reducing the production cost. In addition, the dyeing uniformity is further improved.

The invention is achieved by use of following technical schemes: a tightly-compressing and non-soaking fiber-dyeing method at ultra-small liquor ratio is disclosed, which usually involves compulsorily compressing a material to be dyed, and then dyeing the material to be dyed by making a flowing dyeing liquid to pass through the material to be dyed under compressing state.

The preferable range for the compressing capacity of the material to be dyed under compressing state is 0.3-0.5 g/cm³, and the further preferable range is usually 0.4-0.5 g/cm³.

The material to be dyed can be loaded in a loading device for dyeing process (when dyed), and the compulsory compressing is carried out usually through a mechanical compressing device such that the material to be dyed in the loading device can reach the required compressing capacity.

An axial core tube is usually arranged in the loading device, through holes are usually arranged on the sidewalls of the core tube and the loading device, and the flowing dyeing liquid can enter from the core tube of the loading device for the material to be dyed and can radially enter the material to be dyed from the through holes on the sidewall of the core tube.

A water tank can usually be arranged below the loading device during dyeing, the dyeing liquid in the water tank can be pumped into the core tube for circulating dyeing by a circulating pump, and at least part of the material to be dyed in the loading device is positioned above the liquid surface of the dyeing liquid in the water tank.

The dyeing liquid in the water tank can be heated by means of steam heating and/or electric heating so as to achieve and/or keep the temperature required by the dyeing liquid.

The preferable range for the mass liquor ratio between the material to be dyed and the dyeing liquid used is no more than 1:2, and the further preferable range is 1:1-1:2.

The material to be dyed can be made from wool, cashmere, cotton, chemical fiber, or loose stocks, tops or yarns of fiber formed by mixing the above materials etc.

The beneficial effects of the invention: The material to be dyed is compulsorily compressed and is dyed under compressing state by making a flowing dyeing liquid to pass through the material to be dyed. After the material to be dyed is compulsorily compressed, the compactness of the whole material to be dyed is uniform, the excellent and more obvious uniformity can be achieved especially in the preferable and the further preferable ranges for compressing capacity in the method, the resistance of the whole material to be dyed to the dyeing liquid can be uniform; after the circulating flowing dyeing liquid enters the material to be dyed, the dyeing liquid can keep uniform flowing and be in sufficient contact with the material to be dyed such that the aim of level dyeing is achieved; according to the experiments of the applicant, the level of uniformity of color achieved by the dyeing manner is obviously better than that of the existing dyeing technology, meanwhile, when same dyeing effect is achieved, the needed dye and water consumption are obviously lowered, the dyeing sewage emission is correspondingly reduced, and the effect on environmental caused by sewage is effectively relieved; furthermore, as soaking is not used in the method, the lowest water consumption required by dyeing liquid for realizing the soaking is consequently exempted, such that water surface height in the water tank is enough if only the water can be ensured to be circulated by the pump, and favorable conditions for further lowering the dyeing liquor ratio are provided. On the other hand, the method is further suitable for dyeing a plurality of materials to be dyed with different natures, the materials to be dyed can be dyed by adopting the same equipment, the number of deployed dyeing equipment is reduced, the cost for equipment is lowered, thereby being beneficial to further increasing the profit ratio of enterprises.

### Description of Drawings

Fig. 1 is a schematic drawing of the traditional loose stocks dyeing equipment.
Fig. 2 is a schematic drawing of the equipment used in the invention.
Fig. 3 is a schematic drawing of the specific implementation process for dyeing New Zealand clean wool at the liquor ratio of 1:1.4 in the invention.

### Specific mode for carrying out the invention

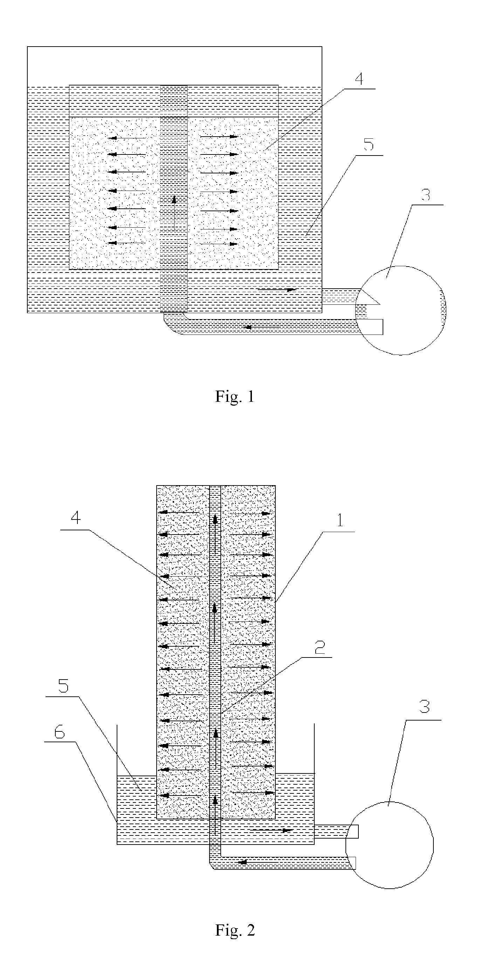

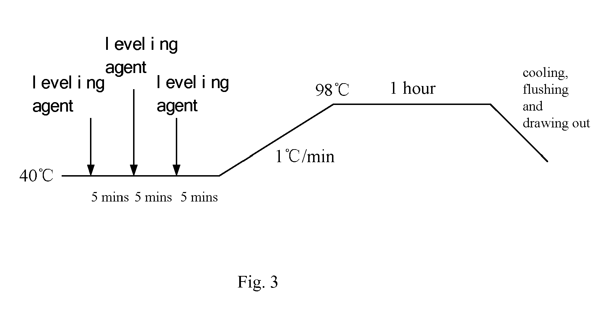

Referring to the Fig. 2 and the Fig. 3, the invention provides a tightly-compressing and non-soaking fiber-dyeing method at ultra-small liquor ratio, which successfully enables the fiber-dyeing at ultra-small liquor ratio, reduces water consumption and sewage emission of dyeing process, increases the dyeing uniformity, effectively relieves the environmental pollution caused by sewage, and reduces the production cost.

Compress a material to be dyed 4 such as loose stocks (e.g. loose wool, loose cashmere, loose cotton and loose chemical fiber etc.), tops (e.g. wool tops, cotton tops and chemical fiber tops etc.) or yarns (e.g. wool yarns, cashmere yarns, cotton yarns, chemical fiber yarns and mixed yarns thereof etc.) and the like uniformly by a mechanical compressing device and have the material to be dyed encapsulated in a specific loading device 1. For the compressed material, e.g. fiber, uniform density is needed to ensure dyeing liquid can pass through the material. The compressing capacity for the compressed material to be dyed, e.g. fiber, can reach 0.4-0.5 g/cm³, such as 0.41 g/cm³, 0.42 g/cm³, 0.43 g/cm³, 0.44 g/cm³, 0.45 g/cm³, 0.46 g/cm³, 0.47 g/cm³, 0.48 g/cm³ and 0.49 g/cm³.

After the compressed material to be dyed is loaded in the loading device, make the dyeing liquid to pass through the material for dyeing by radial flow.

Usually, a core tube 2 can be arranged at a position on the axial direction of the loading device for the material to be dyed where the core tube 2 runs through the axial line of the loading device, a plurality of through holes are arranged on the core tube, and other through holes are arranged on the sidewall of the loading device, so that the radial flow formed by the dyeing liquid 5 can be achieved. The dyeing liquid is inputted from the axial direction of the core tube, and then radially enters the material to be dyed through the holes on the core tube and is uniformly distributed. The direction of the arrow in the drawing is the flow direction of the dyeing liquid.

The dyeing liquid capacity of the gaps of the material to be dyed is usually 0.5-0.6 g/cm³, such as 0.51 g/cm³, 0.52 g/cm³, 0.53 g/cm³, 0.54 g/cm³, 0.55 g/cm³, 0.56 g/cm³, 0.57 g/cm³, 0.58 g/cm³ and 0.59 g/cm³. The dyeing liquid capacity means the ratio between the mass of the dyeing liquid in the loading device and the volume of the space occupied by the dyeing liquid and its value is equal to the mass of the dyeing liquid contained in a unit volume of the loading device.

A circulating pump 3 is connected to a dyeing equipment, a water tank 6 is usually arranged below the loading device during dyeing, and the dyeing liquid in the water tank is circularly pumped into the core tube in the loading device for circularly dyeing by the circulating pump.

According to the tightly-compressing and non-soaking fiber-dyeing method at ultra-small liquor ratio, the dyeing liquid for soaking is not provided any more, at least part of the material to be dyed in the loading device is located above the liquid surface of the dyeing liquid in the water tank of the dyeing equipment, the liquid surface height of the dyeing liquid in the water tank is enough if only the necessary circulation can be maintained, and meanwhile, the concentration of dye in the dyeing liquid should be also considered.

The dyeing equipment finishes the sufficient circulation of the dyeing liquid or treatment fluid, to achieve dyeing uniformity or treating uniformity, and should have the function of heating/cooling the dyeing liquid at the same time. The dyeing liquid can be heated by steam conveyed to the bottom of the water tank through a hot steam input conduit, and the dyeing liquid can also be heated by means of electric heating, so as to keep the temperature necessary for the dyeing liquid.

The mass ratio between the material to be dyed and the dyeing liquid used in a dyeing process is about 1:1, the rest dyeing liquid exists in the circulating pump, heating areas and liquid conveying pipelines, the dyeing liquor ratio can be controlled at about 1:2 and can also be controlled at 1:1.1, 1:1.2, 1:1.3, 1:1.4, 1:1.5, 1:1.6, 1:1.7, 1:1.8 and 1:1.9. For an equipment, the amount of liquid in the pump and the liquid conveying pipeline is a fixed value, and the liquor ratio gradually decreases with the increase of the amount of dyeing fiber. Therefore, the liquor ratio can be less than 1:2 under the condition that the two amounts are reasonably matched with each other.

The invention can be used for the dyeing of various suitable dyes, for example, a specific embodiment as follows:
When the dyeing equipment in the invention is adopted to dye 180Kg of 48-50^{S} New Zealand clean wool, only 250Kg of water is used, and the liquor ratio is 1:1.4. The dyeing formula and the dyeing process are as follows:

**Dyeing formula:**

| | |
|---|---|
| Lanaset red 2B | 0.31% |
| Lanaset yellow 2R | 0.58% |
| Lanaset blue 2R | 0.068% |
| Leveling agent D | 0.25% |
| Glacial acetic acid | 0.8% |

Dyeing process:
Circulating the dyeing liquid in the dyeing equipment by a pump, increasing the temperature to 40 DEG C at first, adding leveling agent, maintaining for 5 minutes, and adding a dye, maintaining for 5 minutes, and then adding the glacial acetic acid, maintaining for 5 minutes, increasing the temperature to 98 DEG C at the speed of 1 DEG C/min, maintaining for 1 hour, then cooling, and carrying out loose colour by flushing.

The method can achieve:
1. Saving dye and assistants: with the decrease of the liquor ratio, the concentration of dye adjuvants in the dyeing liquid and the assistants in treatment fluid greatly increases. For example, the concentration of the dye in the dyeing liquid at the liquor ratio of 1:2 is five times that at the liquor ratio of 1:10, when the use level of the dye is 5% (OWF), the concentration of the dye at the liquor ratio of 1:10 is 0.5%, while the concentration of the dye at the liquor ratio of 1:2 is 2.5%. With the increase of the concentration of the dye, the rate of dyeing and the fixation of some dyes (reactive dyes) can be greatly enhanced, thereby saving the consumption of the dye. With the increase of the concentration of the treatment fluid, the consumption of some assistants can be greatly reduced, for example, the reactive dye for cotton needs salt (glauber salt) for acceleration, and the consumption of the salt can be fold saved due to the decrease of the liquor ratio when the constant salinity is ensured. Provided that the consumption of the salt is 100 Kg at the liquor ratio of 1:10, the consumption of the salt is only 20 Kg at the liquor ratio of 1:2.
2. Reducing energy consumption: decrease of liquor ratio of treatment fluid has a distinct influence on the energy consumption, for example, if the energy consumption at the liquor ratio of 1:10 is equivalent to that used in heating 100 Kg of water from room temperature to 100°C, then the energy consumption at the liquor ratio of 1:2 is equivalent to that used in heating 20 Kg of water from room temperature to 100°C, therefore, the energy consumption for dyeing should be fold decreased.
3. Decreasing sewage emission: with the decrease of the dyeing liquor ratio, the water consumption for dyeing is greatly reduced, and therefore the sewage emission is reduced.
4. Reducing floor space of equipment: due to the dyeing at ultra-small liquor ratio achieved by the compressing of fiber and the non-soaking dyeing, the space occupied by corresponding solution containers and the fiber is reduced, and therefore the floor space of the dyeing equipment as a whole is reduced.
5. Providing a platform for realizing waterless and zero-emission dyeing: for the currently universal implementations, water serves as a dyeing medium, if waterless dyeing is needed to be realized, a dyeing machine with ultra-small liquor ratio absolutely is a good operating platform, recycling processes for dyeing medium, such as extraction, distillation and so on, can be conveniently carried out on the limited dyeing medium arising from the ultra-small liquor ratio so as to truly realize the waterless and zero-emission dyeing.

Under the condition of ultra-small liquor ratio, the material to be dyed is a filter material, so that the water solubility of the dye needs to be strong, in particular, while dyeing with deep colour is in progress, the concentration of the dye is very high, and the dyeing of the material to be dyed can be achieved only if the dye is fully dissolved. The tightly-compressing and non-soaking fiber-dyeing method at ultra-small liquor ratio has certain limitations when applied to the dyeing of some pigments or dyes with poor water solubility.

The compressing capacity, mentioned in the description, means the ratio between the mass of the material to be dyed and the volume of the space (including gaps) occupied by the material to be dyed, and the numerical value of the ratio is equal to the mass of the material to be dyed contained in a unit volume of the loading device.

## Claims

1. A tightly-compressing and non-soaking fiber-dyeing method at ultra-small liquor ratio, which is **characterized by** compulsorily compressing a material to be dyed, and then dyeing by making a flowing dyeing liquid to pass through the material to be dyed under compressing state.

2. The tightly-compressing and non-soaking fiber-dyeing method at ultra-small liquor ratio according to claim 1, wherein the compressing capacity of the material to be dyed under compressing state is 0.3-0.5 g/cm³.

3. The tightly-compressing and non-soaking fiber-dyeing method at ultra-small liquor ratio according to claim 2, wherein the compressing capacity of the material to be dyed under compressing state is 0.4-0.5 g/cm³.

4. The tightly-compressing and non-soaking fiber-dyeing method at ultra-small liquor ratio according to claim 3, wherein the material to be dyed is loaded in a loading device for dyeing, the compulsory compressing is carried out through a mechanical compressing device such that the material to be dyed in the loading device can reach the required compressing capacity.

5. The tightly-compressing and non-soaking fiber-dyeing method at ultra-small liquor ratio according to claim 4, wherein an axial core tube is arranged in the loading device, through holes are arranged on the sidewalls of the core tube and the loading device, and the flowing dyeing liquid enters from the core tube and radially enters the material to be dyed from the through holes on the sidewall of the core tube.

6. The tightly-compressing and non-soaking fiber-dyeing method at ultra-small liquor ratio according to claim 5, wherein a water tank is arranged below the loading device during dyeing, the dyeing liquid in the water tank is pumped into the core tube for circulating dyeing by a circulating pump, and at least part of the material to be dyed in the loading device is positioned above the liquid surface of the dyeing liquid in the water tank.

7. The tightly-compressing and non-soaking fiber-dyeing method at ultra-small liquor ratio according to claim 6, wherein the dyeing liquid in the water tank is heated by means of steam heating and/or electric heating so as to achieve and/or keep the temperature required by the dyeing liquid.

8. The tightly-compressing and non-soaking fiber-dyeing method at ultra-small liquor ratio according to claim 1, 2, 3, 4, 5, 6 or 7, wherein the mass liquor ratio between the material to be dyed and the dyeing liquid used is no more than 1:2.

9. The tightly-compressing and non-soaking fiber-dyeing method at ultra-small liquor ratio according to claim 1, 2, 3, 4, 5, 6 or 7, wherein the mass liquor ratio between the material to be dyed and the dyeing liquid used is 1:1-1:2.

10. The tightly-compressing and non-soaking fiber-dyeing method at ultra-small liquor ratio according to claim 8 or 9, wherein the material to be dyed is made from wool, cashmere, cotton, chemical fiber, or loose stocks, tops, or yarns formed by mixing the above materials.
